# EUROPÄISCHE PATENTSCHRIFT

(11) **EP 2 066 201 B1**
(45) Veröffentlichungstag und Bekanntmachung des Hinweises auf die Patenterteilung: **10.02.2010**
(21) Anmeldenummer: 07803112.7
(22) Anmeldetag: 31.08.2007
(51) Int. Cl.: A47J 31/44, A47J 31/46

(54) **BEWEGBARER KAFFEEAUSLAUF**
MOVABLE COFFEE OUTFLOW
SORTIE CAFÉ MOBILE

(30) Priorität: 19.09.2006 DE 102006043903
(43) Veröffentlichungstag der Anmeldung: 10.06.2009
(73) Patentinhaber: BSH Bosch und Siemens Hausgeräte GmbH, 81739 München (DE)
(72) Erfinder: KAISER, Helmut, 82515 Wolfratshausen (DE); OSTERMAIER, Albert, 83371 Stein A.d. Traun (DE); MANGEL, Dieter, 83101 Achenmühle (DE)
(86) Internationale Anmeldenummer: PCT/EP2007/059116
(87) Internationale Veröffentlichungsnummer: WO 2008/034708

(56) Entgegenhaltungen:
- EP-A1- 0 791 321

## Beschreibung

Die Erfindung betrifft eine Brühgetränkemaschine zur Zubereitung von Tassenportionen mit einem Auslass für Heißdampf und/oder Milchschaum und wenigstens einem weiteren Auslass für das Brühgetränk, die vertikal auf eine Tassenabstellfläche gerichtet sind und wobei wenigstens einer der Auslässe bewegbar ist, sodass die Auslässe vertikal in dieselbe Tasse gerichtet sind.

In der WO 02/21 983 A1 ist eine Ausgussanordnung für eine Brühgetränkemaschine zur Zubereitung unterschiedlicher Getränke auf der Basis von Kaffee und/oder Milch beschrieben, wobei Kaffee, Milch und Wasserdampf über getrennte Zuführungsleitungen je einem Ausgusselement zugeführt werden. Die Ausgusselemente sind auf Tragarmen angeordnet, die als Teil eines Halters mit einer zentralen Steuerscheibe radial nach außen abragen. Hierbei liegt eine freie Stirnfläche der Steuerscheibe an der Stirnfläche einer feststehenden Einlaufscheibe an, und die Steuerscheibe und die Einlaufscheibe sind um ihre gemeinsame Scheibenachse leitend gegeneinander verschiebbar. Die Steuerscheibe und die Einlaufscheibe sind von Kanälen mit zwei Öffnungen durchsetzt, deren erste Öffnungen auf den einander gegenüber stehenden Stirnflächen der Steuerscheibe und der Einlaufscheibe angeordnet sind und deren zweite Öffnungen außerhalb der Stirnflächen liegen. Die zweite Öffnung jedes Kanals in der Steuerscheibe steht über eine rohrförmige Leitung mit wenigstens je einem Ausgusselement in Verbindung, und die zweite Öffnung jedes Kanals in der Einlaufscheibe ist mit je einer der Zuführungsleitungen für Kaffee, Milch und Wasserdampf verbunden. Zur Auswahl eines Getränks ist die Steuerscheibe zu verdrehen, sodass die erforderlichen Auslässe für Kaffee, Milch und/oder Wasserdampf in ein Getränkegefäß vertikal nach unten gerichtet sind. Für jedes Getränk ist also eine separate Anordnung von Auslässen erforderlich, die bei der Zubereitung eines anderen Getränks unter Umständen nicht benötigt werden. Die vorgeschlagene Konstruktion ist also sehr aufwändig.

Dokument EP-A-791 321 offenbart eine Brühgetränkemaschine nach dem Oberbegriff des unabhängigen Anspruchs 1.

Es ist Aufgabe der Erfindung, ausgehend von der Vorrichtung der eingangs genannten Art eine Brühgetränkemaschine anzugeben, bei der die erforderlichen Auslässe für die Getränkezutaten mit möglichst geringem technischem Aufwand zeitgleich in einen Getränkebehälter gerichtet werden können.

Diese Aufgabe wird ausgehend von der eingangs genannten Brühgetränkemaschine dadurch gelöst, dass der Brühgetränkeauslass relativ zum Dampf- bzw. Milchschaumauslass horizontal bewegbar ist. Die Erfindung wendet sich also ab von gemeinsam bewegbaren Auslässen oder den auch sonst üblichen schwenkbaren Dampf- bzw. Milchschaumauslässen, sondern verfolgt vielmehr das Prinzip, den Brühgetränkeauslass bewegbar zu gestalten. Dies schließt zwar die Bewegungsmöglichkeiten des Dampfauslasses nicht generell aus, macht ihn aber nicht zwingend erforderlich. Die Bewegung des Brühgetränkeauslasses ist jedoch technisch erheblich einfacher, da an ihm kein Druck anliegt wie an den bekannten Dampfauslässen und auch kein weiterer Anschluss mitverschwenkt werden muss, wie bei Milchschaumdüsen mit einer Milchansaugung aus einem separaten Milchvorratsbehälter. Der bewegbare Brühgetränkeauslass dagegen reduziert insgesamt den technischen Aufwand für die Brühgetränkemaschine bei gleich bleibendem Bedienungskomfort. "Horizontal bewegbar" soll dabei bedeuten, dass sowohl eine Ausgangsstellung des Brühgetränkeauslasses als auch eine Endstellung nach Abschluss der Bewegung auf derselben horizontalen Ebene liegen. Die erfindungsgemäße Konstruktion ermöglicht also wenigstens eine Betriebsposition, in der der Brühgetränkeauslass und der Dampf- bzw. Milchschaumauslass in unmittelbarer Nähe zueinander angeordnet sind, sodass sie in dieselbe Tasse gerichtet sind.

Grundsätzlich sind verschiedene Bewegungsvorgänge denkbar. Nach einer ersten vorteilhaften Ausgestaltung der Erfindung ist der Auslass horizontal verschiebbar. Diese Bewegungsmöglichkeit ist für den Bediener leicht nachzuvollziehen und daher quasi intuitiv bedienbar. Der Getränkeauslass kann dafür z.B. auf einer horizontal verlaufenden Schiene verschiebbar sein. Das Brühgetränk kann dafür in einem flexiblen Schlauch dem Auslass zugeführt werden, der die horizontale Verschiebung mitmacht. Diese Konstruktion erfordert den geringsten Platzbedarf für die Bewegung des Getränkeauslasses. Alternativ dazu kann der Auslass auch an den Gelenken eines Parallellenkers montiert sein. Auch hier kann das Brühgetränk in einem flexiblen Schlauch oder in einer schwenkbaren festen Rohrleitung zum Getränkeauslass geführt werden.

Nach einer zweiten vorteilhaften Ausgestaltung der Erfindung kann der Auslass um eine horizontale Achse um etwa 180 Grad verdrehbar angeordnet sein. Diese Konstruktionsmöglichkeit erlaubt sinnvollerweise nur zwei Betriebsmöglichkeiten, nämlich eine, in der der Brühgetränkeauslass entfernt und eine weitere, in der der Brühgetränkeauslass in unmittelbarer Nähe des Dampf- bzw. Milchschaumauslasses positioniert ist. Allerdings ist für die beiden Betriebszustände jeweils wenigstens ein separater Brühgetränkeauslass erforderlich. Es kann also nicht derselbe Brühgetränkeauslass für beide Betriebszustände verwendet werden. Die Brühgetränkezufuhr zum Auslass ist über starre verdrehbare Leitungen möglich. Das Getränk findet der Schwerkraft folgend jeweils den richtigen Auslass. Gegebenenfalls kann durch ein Kugelventil verhindert werden, dass in der einen Betriebsposition zuviel Dampf durch die Auslässe der anderen Betriebsposition senkrecht nach oben entweicht.

Nach einer dritten vorteilhaften Ausgestaltung der Erfindung ist der Brühgetränkeauslass um eine vertikale Achse schwenkbar. Der Auslass kann also zwischen den Betriebspositionen hin- und hergeklappt werden. Auch für diese Variante sind starre verdrehbare Leitungen für das Brühgetränk möglich, es können aber auch flexible Schläuche verwendet werden. Diese Variante dürfte den technisch geringsten Aufwand erfordern.

Nur die zweite der oben genannten Konstruktionsmöglichkeiten legt zwingend zwei Betriebspositionen für den Getränkeauslass nahe, nämlich diejenigen beiden Positionen, die sich durch Verschwenken des Auslasses um 180 Grad ergeben. Durch unsachgemäße oder unaufmerksame Bedienung können allerdings auch hier Fehlstellungen entstehen, die ein verlustfreies Beziehen des Brühgetränks vereiteln. Nach einer weiteren vorteilhaften Ausgestaltung der Erfindung umfasst die Brühgetränkemaschine daher eine Vorrichtung zur Definition einer Kaffeeposition, in der Espresso oder Kaffee bezogen werden kann, einerseits, und einer Milchschaumposition des Auslaufs, in der Milchmischgetränke wie Cappuccino oder Cafe latte zubereitet werden können, andererseits. Diese Vorrichtung vermittelt dem Benutzer die korrekte Position des Brühgetränkeauslaufs, in der das Brühgetränk verlustfrei in eine untergestellte Tasse eingeschenkt werden kann. Die Vorrichtung vermeidet also Fehlbedienungen, indem sie nur zwei definierte Betriebspositionen zulässt.

Eine Definition der Betriebspositionen kann zum Beispiel durch die Gestaltung und Dimensionierung der Tassenabstellfläche und damit quasi mittelbar vorgenommen werden. Über die Gestaltung und Position der Tassenabstellfläche können dem Benutzer zwei Abstellflächen für Getränkebehälter vorgegeben und ihm damit mittelbar die korrekte Position des Auslaufs vermittelt werden. Nach einer weiteren vorteilhaften Ausgestaltung der Erfindung erfolgt die Definition jedoch durch eine Fixierung des Auslaufs in den jeweiligen Betriebspositionen. Die Fixierung kann durch eine Verrastung, durch Vorspannung einer Feder oder durch jeweils einen Magneten erfolgen. Der Auslass kann durch die Fixierung jedenfalls in der erforderlichen Position gehalten werden, sodass er insbesondere während eines Getränkebezugs nicht versehentlich wegbewegt werden kann.

Nach einer weiteren vorteilhaften Ausgestaltung der Erfindung kann die Einnahme der korrekten Betriebsposition durch eine optische und/oder akustische Signalisierung angegeben werden, sobald der Auslass seine korrekte Lage erreicht hat. Dies kann durch ein Knacken beim Einschnappen einer Verrastung erfolgen oder durch ein optisches oder akustisches Signal angezeigt werden. Dafür kann z. B. ein Anzeigefeld der Brühgetränkemaschine aufleuchten bzw. hinterleuchtet oder eine Beleuchtung des Getränkebehälters am Brühgetränkeauslass eingeschaltet werden. Die Signalisierung informiert jedenfalls den Benutzer darüber, dass der Auslass sich jetzt in einer betriebsbereiten Position befindet. Umgekehrt erhält der Benutzer bei einem ausbleibenden Signal die Information, dass die Position des Auslasses korrigiert werden muss.

Nach einer weiteren vorteilhaften Ausgestaltung der Erfindung erfolgt zusätzlich oder alternativ zur Signalisierung eine Kontaktierung zur Aktivierung des Auslaufs in der definierten Betriebsposition. Solange also der Auslass keine definierte Betriebsposition eingenommen hat, wird ein Getränkebezug elektrisch und/oder mechanisch unterbunden. Eine derartige Vorrichtung erhöht somit die Bedienungssicherheit.

Für Getränke mit Milch bzw. Milchschaum als Bestandteil sind in aller Regel größere Getränkegefäße erforderlich als für reine Kaffeegetränke. Am deutlichsten wird dies am Beispiel des Espressos gegenüber dem Cafe latte. Um diesem Umstand Rechnung zu tragen, sind viele Kaffeevollautomaten mit vertikal verschiebbaren Getränkeauslässen ausgestattet. Alternativ dazu gibt es höhenverstellbare Tassenabstellflächen. Nach einer weiteren vorteilhaften Ausgestaltung der Erfindung ist der Abstand des Auslasses zur Tassenabstellfläche in der Kaffeeposition geringer als in der Milchschaumposition. Da der Brühgetränkeauslass zwischen der Kaffee- und der Milchschaumposition nur horizontal bewegbar und damit in beiden Positionen auf derselben Höhe liegt, wird der unterschiedliche Abstand in beiden Positionen durch die Gestaltung der Tassenabstellfläche erzielt. Sie ist also quasi abgetreppt ausgebildet, sodass sie in der Kaffeeposition näher am Auslass liegt als in der Milchschaumposition. Damit erübrigt der horizontal bewegbare Auslass also seine zusätzliche vertikale Bewegbarkeit oder eine verstellbare Tassenabstellfläche zum Befüllen unterschiedlich hoher Getränkegefäße.

Das Prinzip der Erfindung wird anhand einer Zeichnung in Folge noch beispielshalber näher erläutert. In der Zeichnung zeigen die Figuren a jeweils die Kaffeeposition und die Figuren b jeweils die Milchschaumposition in unterschiedlichen Ausführungsformen, nämlich:
- Figur 1:: mit einem horizontal entlang einer Schiene verfahrbaren Auslauf,
- Figur 2:: mit einem um eine vertikale Achse verschwenkbaren Auslauf,
- Figur 3:: mit einem um eine horizontale Achse verschwenkbaren Auslauf und
- Figur 4:: mit einem gelenkig gelagerten und verschiebbaren Auslauf.

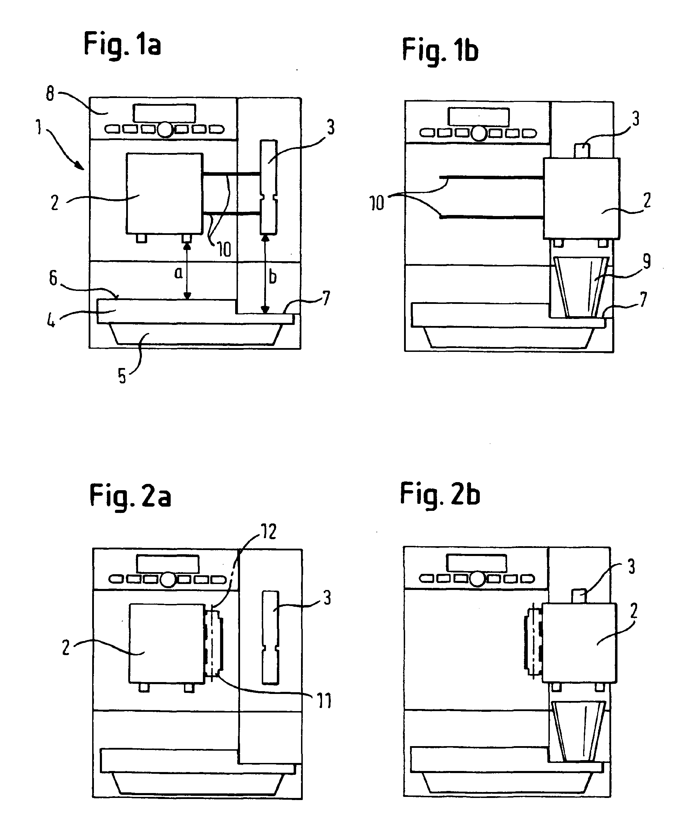

Alle Ausführungsformen des Kaffeevollautomaten, die in den Figuren 1 bis 4 dargestellt sind, haben prinzipiell den gleichen Aufbau. Er soll zunächst anhand der Figur 1 a erläutert werden. Demnach umfasst ein Kaffeevollautomat 1 einen Kaffeeauslasskopf 2 und eine Milchschäumvorrichtung 3. Die Milchschäumvorrichtung 3 kann sowohl aus einer Dampfdüse bestehen, die in einen bereits mit Milch gefüllten Getränkebehälter gehalten wird oder über einen Milchanschluss verfügen, mit dem Milch aus einem separaten Behälter in den Dampfstrom angesaugt wird. Sowohl der Auslasskopf 2 als auch die Milchschäumvorrichtung 3 sind oberhalb einer Tassenabstelleinrichtung 4 angeordnet. Die Tassenabstelleinrichtung 4 umfasst ein Sammelbecken 5 für überschüssige Flüssigkeiten, das unterhalb einer Abstellfläche 6 angeordnet ist. Die Abstellfläche 6 erstreckt sich nahezu über die gesamte Gehäusebreite des Kaffeevollautomaten 1. Im Bereich der Milchschäumvorrichtung 3 weist sie einen Absatz 7 auf, in den sie nach unten abgesetzt ist. Demzufolge bietet die Abstellfläche 6 unter dem Auslasskopf 2 einen geringeren Abstand a, wohingegen unter der Milchschäumvorrichtung 3 ein größerer Abstand b besteht.

Im oberen Bereich des Kaffeevollautomaten ist eine Bedieneinheit 8 mit Bedienungselementen und einem Anzeigefeld angeordnet.

Figur 1 a zeigt einen Kaffeevollautomaten 1 gemäß einer ersten Ausführungsform in seiner Kaffeeposition. Der Kaffeeauslauf 2 befindet sich bezüglich einer gedachten Mittelsenkrechten im linken Bereich des Kaffeevollautomaten 1 über der Abstellfläche 6. In dieser Position werden gewöhnlich Kaffeegetränke ohne Milch bzw. Milchschaumzusatz bezogen.

Demgegenüber stellt Figur 1b die Milchschaumposition des Kaffeevollautomaten 1 bzw. des Auslasskopfes 2 dar. Der Auslasskopf 2 befindet sich nun im rechten Bereich der Ansicht des Kaffeevollautomaten 1, und zwar unmittelbar neben bzw. in Ansichtsrichtung vor der Milchschäumvorrichtung 3. Er verdeckt die Milchschäumvorrichtung 3, sodass sowohl er als auch die Schäumvorrichtung 3 in dasselbe Getränkegefäß 9 gerichtet sind. Das Gefäß 9 ist auf dem Absatz 7 der Abstellfläche 6 positioniert, weil es sich dabei um einen hohen Becher handelt. Derartige Getränkegefäße sind vor allem bei Milchmischgetränken üblich bzw. erforderlich, weil sie ein größeres Volumen einnehmen. Sie finden daher ausschließlich auf dem Absatz 7 Platz, weil er einen genügend großen Abstand b gegenüber dem Auslasskopf 2 und der Schäumvorrichtung 3 bietet. Ein konstanter Abstand b entlang der gesamten Abstellebene wäre nicht praktikabel, weil sonst zwischen dem Auslasskopf 2 und dem Boden eines Getränkegefäßes z.B. für Espresso ein zu großer Abstand und damit eine zu große Fallhöhe für das Kaffeegetränk entstehen würde, die zum Spritzen führt.

Gegenüber den weiteren Ausführungsformen bietet die Ausführungsform des Kaffeevollautomaten 1 gemäß Figur 1a, b die Besonderheit, dass der Auslasskopf 2 von seiner Kaffeeposition gemäß Figur 1a in seine Milchschäumposition gemäß Figur 1b durch eine horizontale Verschiebung bewegt werden kann. Dazu ist der Auslauf an zwei horizontalen Schienen 10 befestigt, entlang deren er von der einen in die andere Position verschoben werden kann.

Eine erste Variante stellt die Konstruktion nach Figur 2a, b dar. Der prinzipielle Aufbau des Kaffeevollautomaten 1 ist unverändert, lediglich die Mechanik zur Bewegung des Auslasskopfes 2 aus der Kaffeeposition gemäß Figur 2a in die Milchschäumposition gemäß Figur 2b ist abweichend: Der Auslasskopf 2 ist nun an einem Scharnier 11 befestigt, das ein Verschwenken um die vertikale Achse 12 und um etwa 180 Grad ermöglicht. Nach der Verschwenkung befindet sich der Auslasskopf 2 in der Milchschäumposition gemäß Figur 2b vergleichbar mit Figur 1b.

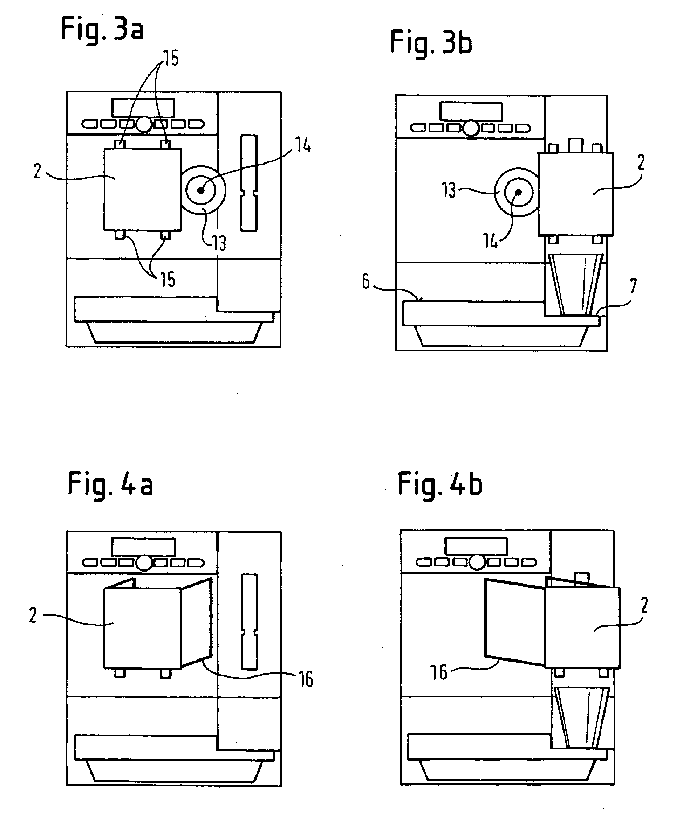

Eine zweite Variante ist in den Figuren 3a, b dargestellt: Der dortige Auslasskopf 2 ist an einem Drehzylinder 13 befestigt, der um eine horizontale Drehachse 14 in der Blickrichtung drehbar ist. Der Auslasskopf 2 wird von der Kaffeeposition gemäß Figur 3a in die Schäumposition gemäß Figur 3b gebracht, indem er im Wesentlichen um 180 Grad um die Achse 14 gedreht wird. Da er nun gegenüber der Kaffeeposition auf dem Kopf steht, verfügt der Auslasskopf 2 über insgesamt vier Auslaufstutzen 15, die jeweils paarweise in der Kaffee- oder in der Milchschäumposition vertikal nach unten in Richtung der Abstellfläche 6 bzw. ihres Absatzes 7 gerichtet sind.

Die letzte Variante ist in den Figuren 4a, b dargestellt. Der dortige Auslasskopf 2 wird im Prinzip ebenfalls horizontal verschoben, wofür er an einem Parallellenker 16 befestigt ist. Der Parallellenker 16 bewirkt, dass der Auslasskopf 2 von der Kaffeeposition über eine leicht bogenförmige Bahn zum Benutzer hin ausschwenkend in die Milchschäumposition gebracht werden kann.

### Bezugszeichenliste

- 1: Kaffeevollautomat
- 2: Auslasskopf
- 3: Milchschäumvorrichtung
- 4: Tassenabstelleinrichtung
- 5: Sammelbecken
- 6: Abstellfläche
- 7: Absatz
- 8: Bedieneinheit
- 9: Getränkegefäß
- 10: horizontale Schienen
- 11: Scharnier
- 12: vertikale Achse
- 13: Drehzylinder
- 14: Achse
- 15: Auslaufstutzen
- 16: Parallellenker

## Patentansprüche

1. Brühgetränkemaschine (1) zur Zubereitung von Tassenportionen mit einem Auslass (2) für das Brühgetränk und einem Auslass (3) für Heißdampf und/oder Milchschaum, die beide vertikal auf eine Tassenabstellfläche (4) gerichtet sind und wobei einer der Auslässe bewegbar ist, sodass die Auslässe vertikal in dieselbe Tasse (9) gerichtet sind, **dadurch gekennzeichnet, dass** der Brühgetränkeauslass (2) relativ zum Dampf- bzw. Milchschaumauslass (3) horizontal bewegbar ist.

2. Brühgetränkemaschine (1) nach Anspruch 1, **gekennzeichnet durch** einen horizontal verschiebbaren Auslass (2).

3. Brühgetränkemaschine (1) nach Anspruch 2, **dadurch gekennzeichnet, dass** der Auslass (2) entlang einer horizontal verlaufenden Schiene (10) verschiebbar ist.

4. Brühgetränkemaschine (1) nach Anspruch 2, **dadurch gekennzeichnet, dass** der Auslass (2) mittels Gelenken (16) parallel verschiebbar gelagert ist.

5. Brühgetränkemaschine (1) nach Anspruch 1, **gekennzeichnet durch** einen um eine horizontale Achse um etwa 180° verdrehbaren Auslass (2).

6. Brühgetränkemaschine (1) nach Anspruch 1, **gekennzeichnet durch** einen um eine vertikale Achse (12) verschwenkbaren Auslass (2).

7. Brühgetränkemaschine (1) nach einem der obigen Ansprüche, **dadurch gekennzeichnet, dass** der Auslass (2) ausschließlich zwischen einer Kaffeeposition und einer Milchschaumposition bewegbar ist.

8. Brühgetränkemaschine (1) nach obigem Anspruch, **gekennzeichnet durch** eine Vorrichtung zur Definition der Lage des Auslasses (2) in der Kaffee- und der Milchschaumposition.

9. Brühgetränkemaschine (1) nach obigem Anspruch, **gekennzeichnet durch** eine Verrastung des Auslasses (2) in den jeweiligen Betriebspositionen.

10. Brühgetränkemaschine (1) nach Anspruch 8 oder 9, **gekennzeichnet durch** eine optische und/oder akustische Signalisierung, sobald der Auslass (2) eine Betriebsposition erreicht hat.

11. Brühgetränkemaschine (1) nach einem der Ansprüche, **gekennzeichnet durch** eine Kontaktierung des Auslasses (2) in den definierten Betriebspositionen zur Aktivierung des Auslasses (2).

12. Brühgetränkemaschine (1) nach Anspruch 7, **dadurch gekennzeichnet, dass** in der Kaffeeposition der Abstand (a) des Auslasses (2) zur Tassenabstellfläche (6) geringer ist als in der Milchschaumposition

## Claims

1. Hot drinks machine (1) for preparing cup portions, with an outlet (2) for the hot drink and an outlet (3) for hot steam and/or milk froth, which are both directed vertically towards a cup support surface (4) and wherein one of the outlets is movable so that the outlets are vertically directed into the same cup (9), **characterised in that** the hot drink outlet (2) is horizontally movable relative to the steam or milk froth outlet (3).

2. Hot drinks machine (1) according to claim 1, **characterised by** a horizontally displaceable outlet (2).

3. Hot drinks machine (1) according to claim 2, **characterised in that** the outlet (2) is displaceable along a horizontally extending rail (10).

4. Hot drinks machine (1) according to claim 2, **characterised in that** the outlet (2) is mounted by means of joints (16) to be parallelly displaceable.

5. Hot drinks machine (1) according to claim 1, **characterised by** an outlet (2) rotatable through approximately 180° about a horizontal axis.

6. Hot drinks machine (1) according to claim 1, **characterised by** an outlet (2) pivotable about a vertical axis (12).

7. Hot drinks machine (1) according to any one of the preceding claims, **characterised in that** the outlet (2) is movable exclusively between a coffee position and a milk froth position.

8. Hot drinks machine (1) according to the preceding claim, **characterised by** a device for definition of the position of the outlet (2) in the coffee and the milk froth position.

9. Hot drinks machine (1) according to the preceding claim, **characterised by** a detenting of the outlet (2) in the respective operating positions.

10. Hot drinks machine (1) according to claim 8 or 9, **characterised by** an optical and/or acoustic signalling as soon as the outlet (2) has reached an operating position.

11. Hot drinks machine (1) according to any one of the preceding claims, **characterised by** a contacting of the outlet (2) in the defined operating positions for activation of the outlet (2).

12. Hot drinks machine (1) according to claim 7, **characterised in that** in the coffee position the spacing (a) of the outlet (2) from the cup support surface (6) is smaller than in the milk froth position.

## Revendications

1. Machine de préparation de boissons chaudes (1) pour la préparation de portions de tasse avec une sortie (2) pour la boisson chaude et une sortie (3) pour de la vapeur surchauffée et/ou de la mousse de lait, qui sont toutes deux dirigées verticalement vers une surface de dépose de tasses (4) et dans laquelle l'une des sorties est mobile, de sorte que les sorties soient dirigées verticalement dans la même tasse (9), **caractérisée en ce que** la sortie de boissons chaudes (2) est mobile horizontalement par rapport à la sortie de vapeur resp. de mousse de lait (3).

2. Machine de préparation de boissons chaudes (1) selon la revendication 1, **caractérisée par** une sortie (2) mobile horizontalement.

3. Machine de préparation de boissons chaudes (1) selon la revendication 2, **caractérisée en ce que** la sortie (2) est mobile le long d'un rail (10) s'étendant horizontalement.

4. Machine de préparation de boissons chaudes (1) selon la revendication 2, **caractérisée en ce que** la sortie (2) est logée de façon mobile parallèlement au moyen d'articulations (16).

5. Machine de préparation de boissons chaudes (1) selon la revendication 1, **caractérisée par** une sortie (2) pivotant d'environ 180° autour d'un axe horizontal.

6. Machine de préparation de boissons chaudes (1) selon la revendication 1, **caractérisée par** une sortie (2) pivotant autour d'un axe vertical (12).

7. Machine de préparation de boissons chaudes (1) selon l'une des revendications précédentes, **caractérisée en ce que** la sortie (2) est uniquement mobile entre une position café et une position mousse de lait.

8. Machine de préparation de boissons chaudes (1) selon la revendication précédente, **caractérisée par** un dispositif de définition de la situation de la sortie (2) dans la position café ou dans la position mousse de lait.

9. Machine de préparation de boissons chaudes (1) selon la revendication précédente, **caractérisée par** un enclenchement de la sortie (2) dans les positions de fonctionnement respectives.

10. Machine de préparation de boissons chaudes (1) selon la revendication 8 ou 9, **caractérisée par** une signalisation optique et/ou acoustique dès que la sortie (2) a atteint une position de fonctionnement.

11. Machine de préparation de boissons chaudes (1) selon l'une des revendications 8 à 10, **caractérisée par** un contact de la sortie (2) dans les positions de fonctionnement définies pour l'activation de la sortie (2).

12. Machine de préparation de boissons chaudes (1) selon la revendication 7, **caractérisée en ce que**, en position café, l'écartement (a) de la sortie (2) par rapport à la surface de dépose de tasses (6) est moins élevé que dans la position mousse de lait.
